# EUROPEAN PATENT APPLICATION

(11) **EP 3 779 806 A1**
(43) Date of publication of application: **17.02.2021**
(21) Application number: 19191572.7
(22) Date of filing: 13.08.2019
(51) Int. Cl.: G06N 5/00, G06N 3/04, G06N 5/02, G06N 3/063

(54) **AUTOMATED MACHINE LEARNING PIPELINE IDENTIFICATION SYSTEM AND METHOD**

(71) Applicant: University of Tartu, 50090 Tartu (EE)
(72) Inventor: Sakr, Sherif Aly Ahmed, 50090 Tartu (EE)
(74) Representative: EIP

(57) **Abstract**

There is described a computer-implemented framework for identifying a machine learning pipeline to process a subject dataset using a knowledge base storing, for a plurality of different datasets, performance metrics for one or more different machine learning pipelines. The method involves identifying datasets in the knowledge base that are similar to the subject dataset, and then selecting candidate machine learning pipelines in dependence upon the performance metrics for the machine learning pipelines stored in the knowledge base in association with the identified datasets. The candidate machine learning pipelines are then tested to determine performance metrics for each candidate machine learning pipeline, with the testing of the candidate machine learning pipelines being executed in dependence on available computing resources and an available time budget.

## Description

### Technical Field

The present invention relates to machine learning, and in particular relates to a framework for the building of scalable automated machine learning pipelines capable of handling big datasets.

### Background

Interest in machine learning techniques has increasingly been growing as a result of successful implementation of machine learning in several application domains. In general, each machine leaning technique involves several stages that together form a machine learning pipeline. For example, a machine learning pipeline may involve:
- preprocessing such as normalization, scaling, imputation and encoding;
- feature engineering, for example feature synthesis, feature selection and feature extraction; and
- model building, for example using classification or regression techniques.

Conventionally, building a machine learning pipeline for a new application involves a data scientist testing the performance for various different options for each stage of the machine learning pipeline to identify the best performing machine learning pipeline. This is, however, becoming more and more challenging due to increasing numbers of options for each stage of the machine learning pipeline. Further, the performance testing tends to involve the processing of large datasets (particularly given that typically the larger the dataset, the better the performance of the resultant machine learning pipeline), which may involve intensive use of computing resources, such as processor nodes and memory, over a sustained period of time. Finally, the number of data scientists available with the necessary expertise to build a machine learning pipeline is becoming more and more limited in comparison with growing sizes of digital data and the number of desired new machine learning applications.

Recently, automated centralized frameworks have been designed to support the machine learning modelling process. For example, the *Auto-Weka* framework performs algorithm selection and hyper-parameter optimization based on the machine learning techniques of the *Weka* machine learning software by treating all of *Weka* as a single machine learning framework and using Bayesian optimization to find a strong instantiation for a given dataset. This approach has been developed further in the *Auto-Sklearn* framework, which is implemented based on the machine learning techniques of the *scikit-learn* machine learning package.

### Summary

The present invention addresses various limitations of the previous automated frameworks.

According to a first aspect of the present invention, there is provided a computer-implemented method for identifying a machine learning pipeline to process a subject dataset using a knowledge base storing, for a plurality of different datasets, performance metrics for one or more different machine learning pipelines. The method involves identifying datasets in the knowledge base that are similar to the subject dataset, and then selecting candidate machine learning pipelines in dependence upon the performance metrics for the machine learning pipelines stored in the knowledge base in association with the identified datasets. The candidate machine learning pipelines are then tested to determine performance metrics for each candidate machine learning pipeline, with the testing of the candidate machine learning pipelines being executed in dependence on available computing resources and an available time budget.

Contrary to existing automated machine learning frameworks such as *Auto-Weka* and *Auto-Sklearn,* the present invention provides a scalable distributed solution which is not tied to any particular machine learning package. The increased range of possible machine learning pipelines introduces various technical implementation challenges, particularly with regard to making best use of computing resources, such as processing nodes and memory, and making best use of the available time. This challenge can be viewed as a search optimization problem on a large search space with the aim of finding a near optimal solution within a given time budget. The present invention addresses these technical implementation challenges by using a knowledge base to select candidate machine learning pipelines, and then testing of the candidate machine learning pipelines based on available computing resources and an available time budget.

The computing resources may include a plurality of processing nodes and the candidate machine learning pipelines may include both distributed machine learning algorithms and centralized machine learning algorithms.

In an example, one of the performance metrics stored by the knowledge base in association with a dataset and a machine learning pipeline is a tunability score indicative of the variability of the performance of that machine learning pipeline when processing that dataset with a configuration of associated hyper-parameters. The testing of the candidate machine learning pipelines can then comprise scheduling access by the candidate machine learning pipelines to the computing resources in dependence on the tunability score for each candidate machine learning pipeline. In this way, more time can be allocated to machine learning algorithms that are likely to exhibit comparatively high variability in performance with different configurations of associated hyper-parameters. The scheduling of access by the candidate machine learning pipelines to the computing resources may further depend on an iteration time cost for each candidate machine learning pipeline, the iteration time cost indicative of the time required to test a configuration of the associated candidate machine learning pipeline, with the iteration time cost for a candidate machine learning algorithm depends on the required sample size, the available computing resources and whether the components of the candidate machine learning pipeline can be executed in parallel.

In an example, the present invention may comprise a preliminary step of receiving an input identifying a performance metric to be optimized, with the testing of the candidate machine learning pipelines comprises optimizing the input performance metric for each candidate machine learning pipeline in dependence on the available computing resources and the available time budget. The candidate machine learning pipelines may then be ranked in accordance with the input performance metric.

Following testing of the candidate machine learning pipelines, data indicative of the subject dataset may be stored in the knowledge base in association with the performance metrics for the candidate machine learning pipelines determined in the testing. In this way, the processing associated with the testing for the subject dataset can be used to improve the identification of machine learning pipelines for subsequent subject datasets.

Further features and advantages of the invention will become apparent from the following description of preferred embodiments of the invention, given by way of example only, which is made with reference to the accompanying drawings.

### Brief Description of the Drawings

Figure 1 schematically shows the main components of an automated machine learning framework according to the present invention;
Figure 2 is a flow chart showing the main operations performed by the automated machine learning framework illustrated in Figure 1.

### Detailed Description

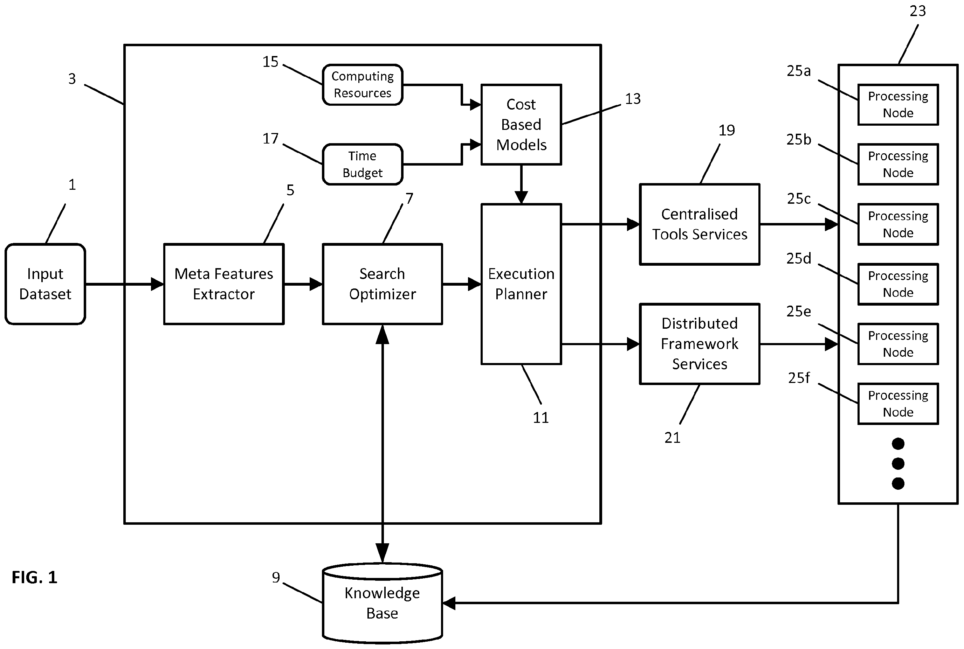

As shown in Figure 1, in an example of the machine learning framework according to the present invention, a subject dataset 1 is input to an analysis module 3 which analyses the subject dataset 1 and co-ordinates a testing schedule to determine a ranking of performance of various machine learning pipelines based on a user-defined performance metric (e.g., accuracy, sensitivity, specificity, F1-score).

In particular, in the analysis module 3 the subject dataset 1 is first input to a meta-features extractor 5, which extracts statistical meta-features of the subject dataset 1 that describe the representative characteristics of the subject dataset 1. Examples of meta-features include:
- the number of instances;
- the number of features;
- the ratio of numerical to categorical features;
- measurements relating to the skewness of the numerical features;
- measurements relating to the kartosis of the numerical features; and
- measurements relating to the number of symbols in categorical features.

In practice, when determining the number of meta-features to be used to represent a dataset, there is a trade-off to be made between improving the accuracy of the representation by increasing the number of meta-features and the computational overhead required to extract the meta-features.

The meta-features output by the meta-features extractor 5 are input to a search optimiser 7, which determines candidate pipelines using a knowledge base 9, which stores the statistical meta-features for previously input subject datasets together with the associated performance metrics of different machine learning pipelines and their tuned hyper-parameters for those input subject datasets. As will be described in more detail hereafter, the knowledge base 9 is continuously updated with the statistical meta-features for newly input subject datasets and the measured performance of various machine learning pipelines that were tested by the framework with respect to those newly input machine learning pipelines.

The search optimizer 7 sends a signal to the knowledge base 9 conveying the extracted meta-features for the subject dataset 1. The knowledge base 9 identifies previously input datasets that are similar to the subject dataset by comparing the extracted meta-features for the subject dataset 1 with the stored meta-features for previously-input datasets. The knowledge base 9 then sends a signal to the search optimizer 7 identifying the machine learning pipelines that had been tested for the most similar previously-input datasets together with the performance metrics for those machine learning pipelines.

The search optimizer 7 processes the data received from the knowledge base 9 to rank the identified machine learning pipelines based on their expected performance against the user-defined performance metric, and selects candidate machine learning pipelines based on that ranking. The search optimizer then sends data identifying the candidate machine learning pipelines to an execution planner 11.

The process performed by the framework to identify candidate machine learning pipelines is summarised as follows:

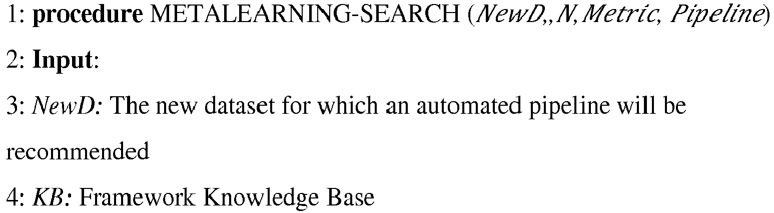

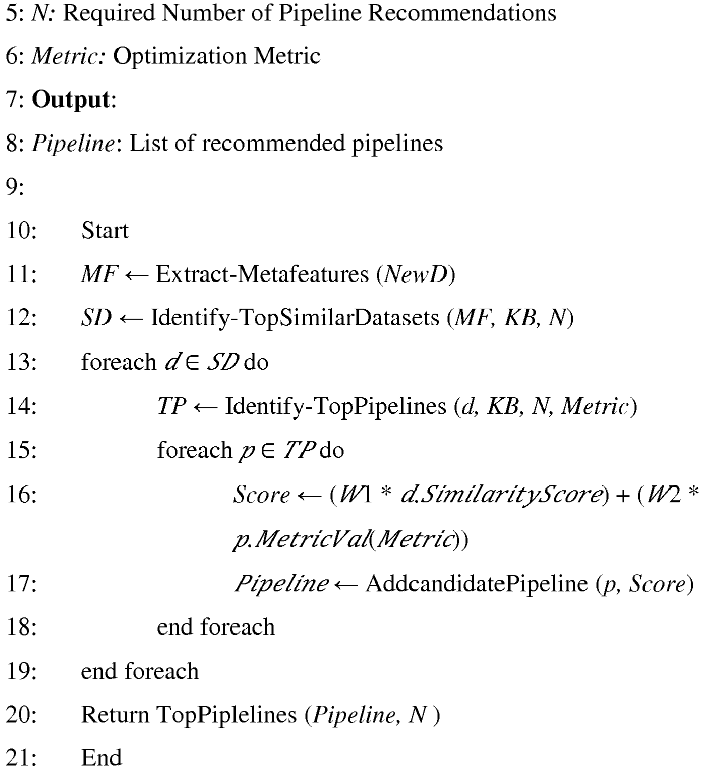

As set out above, the process takes as inputs the subject (new) dataset 1, the contents of the knowledge base 9, a required number *N* of candidate pipelines and the user-defined performance metric. After extracting the meta-features of the subject dataset 1, the top N₁ similar datasets (where N₁ is a function of *N*) are identified in the knowledge base 9. This involves calculating a similarity score (*d.SimilarityScore*) for each dataset of the knowledge base, the similarity score for a dataset providing a measure of the similarity of that dataset to the subject dataset 1.

For the top N₁ similar datasets, the top N₂ performing pipelines (where N₂ is a function of *N*) according to the user-defined performance metric are identified, and then for each of those top N₂ performing pipelines, a *Score* value is calculated by performing a weighted sum of the similarity score for the associated dataset and the value of the user-defined performance metric. Finally, the top N₂ performing pipelines are ranked by their *Score* values, and the top *N* ranked pipelines are output as the candidate pipelines.

The execution planner 11 uses the data identifying the candidate machine learning pipelines to construct a direct acyclic graph which is equivalent to the structure of tasks for the candidate machine learning pipelines. This direct acyclic graph is then optimized using cost-based models 13, which takes into account both data 15 identifying the available computing resources and data 17 identifying an available time budget.

As shown in Figure 1, the framework includes both centralised tools services 19, such as the *Weka* machine learning package and the *scikit-learn* machine learning package, and distributed framework services 21, such as the *Spark Mlib* machine earning package, the *Mahout* machine learning package and the *SystemML* machine learning package. As such, the framework can take advantage of both the scalability of distributed machine learning platforms, making the processing of large datasets more feasible, and the rich functionality of centralised machine learning platforms.

The available computing resources 23 includes a plurality of processing nodes 25a-25f. It will be appreciated that each of the centralised machine learning platforms utilises a single processing node 25, whereas the distributed machine learning platforms can utilise multiple processing nodes 25. To test the candidate machine learning pipelines, the execution planner 11 outputs tasks to the centralised tools services 19 related to candidate machine leaning pipelines using a centralised service and outputs tasks to the distributed framework service 21 related to candidate machine learning pipelines using a distributed service.

The process performed by the execution planner 11 to generate an execution plan is summarised as follows:

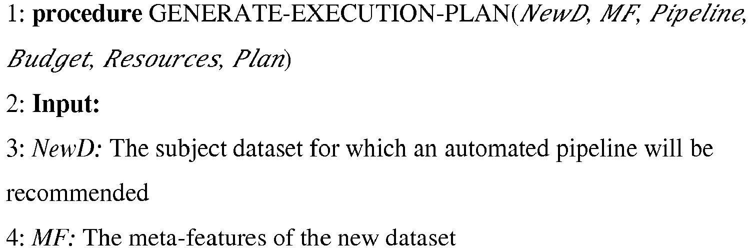

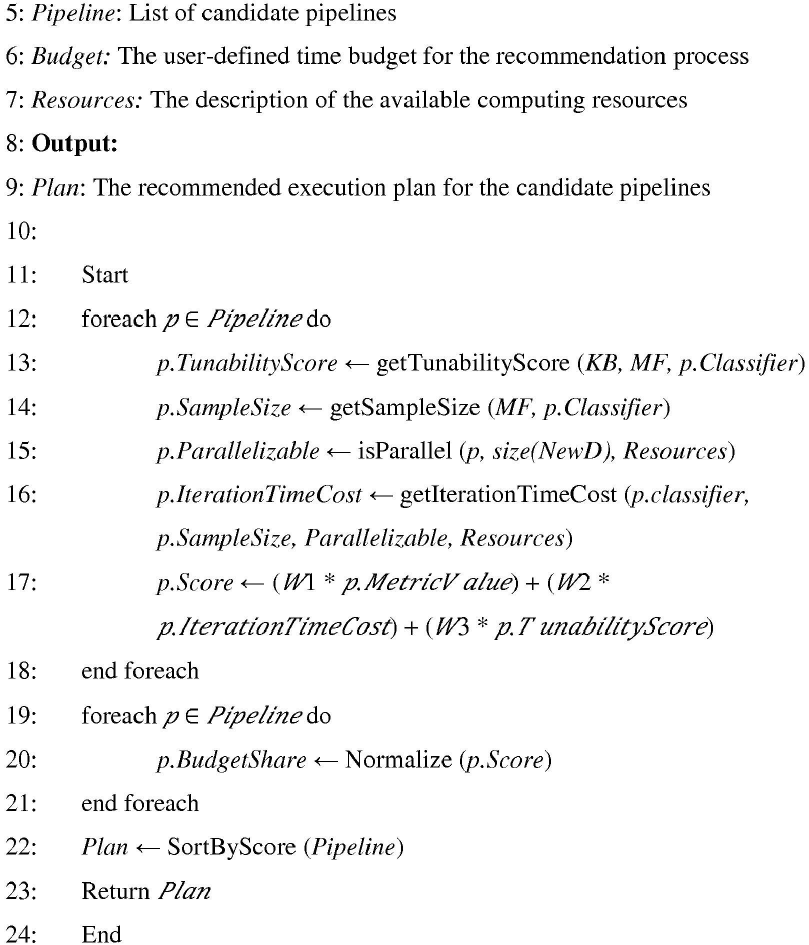

As the performance of machine learning pipelines varies with the changes in the configurations of their hyper-parameter values, in this example a tunability score (*p.TunabilityScore*) is determined using data in the knowledge base (*KB*) 9 for each machine learning pipeline, the tunability score being indicative of the of the variability of a performance of that machine learning pipeline for with the configuration of associated hyperparameters for similar datasets. In this way, the execution planner 11 can assign a higher proportion of the time budget to candidate machine learning platforms having relatively high tunability scores and a lower proportion of the time budget to candidate machine learning platforms having relatively low tunability scores.

The function getSampleSize estimates an adequate sample size (*p.SampleSize*) for each machine learning pipeline that can provide an accurate assessment of that pipeline, again using data from the knowledge base (in particular sampling sizes for previous datasets with similar meta-features).

The function isParallel assesses whether it is possible to paralleize the execution or whether the execution needs to be centralized.

The function getIterationTimeCost estimates the time cost per iteration for a machine learning pipeline, which is an important factor in allocating the time budget between the candidate machine learning pipelines. The function getIterationTimeCost uses information about the required sample size, the ability to parallelize and the available computing resources for a machine learning pipeline to estimate the time cost for each iteration for that machine learning pipeline.

A ranking score (*p.score*) is then calculated for each machine learning pipeline by performing a weighted sum of a performance metric value of the machine learning pipeline, the iteration time cost for the machine learning pipeline and the tunability score.

Finally, a time budget share is calculated for each machine learning pipeline in accordance with its ranking score, and an execution plan is generated based on the calculated budget shares.

In this example, as the tasks are performed by the computing resources 23, the resultant performance metrics are output to the search optimizer 7, which identifies new candidate pipelines based on the performance metrics, and to the knowledge base 9, which stores the performance metrics in association with meta-features for the subject dataset future reference.

Following completion of the testing, the framework determines the candidate machine learning platform, including the associated hyper-parameters, that provides the best performance in accordance with the user-defined performance metric, and outputs details of that candidate machine learning platform as a recommendation for use with the subject dataset.

The described framework has several advantages, including:
- By continuously growing the knowledge base 9 by storing performance metrics for machine learning pipelines tested for new subject datasets, the recommendations for machine learning pipelines for future subject datasets can improve over time in a collaborative manner.
- By including distributed machine learning frameworks and multiple processing nodes, the described framework is suitable for handling big datasets, for which the use of centralized frameworks using a single processing node is not feasible.
- The ability to also test centralized machine learning frameworks allows the described framework to take advantage of the richer functionality associated with some centralized machine learning frameworks.
- The described framework is agnostic to the supported programming languages in order to ensure interoperability and integration with the different machine learning frameworks. The described framework provides REST APIs that can be embedded in any programming language in addition to being used as a RESTful Web Service allowing a user to upload a dataset, or meta-features for a dataset, and receive a recommendation for a machine learning pipeline.

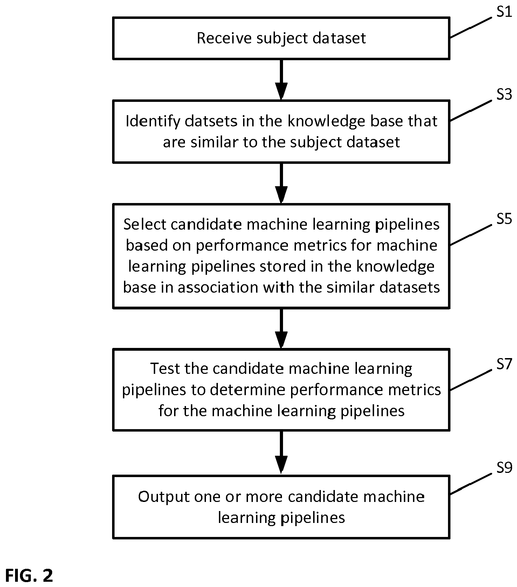

Figure 2 is a flow diagram showing the main operations performed by the described framework. In particular, the framework receives, at S1, a subject dataset and then identifies, at S3, datasets in the knowledge base that are similar to the subject dataset. The framework then selects, at S5, candidate machine learning pipelines in dependence on performance metrics for machine learning pipelines stored in the knowledge base in association with the similar datasets. The framework then tests, at S7, the candidate machine learning pipelines to determine performance metrics for the machine learning pipelines, and outputs, at S9, one or more recommended machine learning pipelines.

The present invention is typically implemented by way of a computer program product comprising instructions for performing any of the previously described computer-implemented methods when loaded into system memory and processed by one or more processors. The system memory and one or more processors are comprised within a computer system device, such as a desktop or laptop computer for example. The instructions comprise computer program code written in at least one computer programming language. Said computer program code is encoded within at least one data file that is stored in volatile memory comprised within the system memory of the computer system device. In certain cases associated with this embodiment, the computer program comprising the instructions are recorded on a computer-readable storage medium. Such a computer-readable storage medium comprises, for example, one of magnetic, optical or tape media, a compact disc (CD), a digital versatile disc (DVD), or a data storage device such as a flash memory drive with an integrated Universal Serial Bus (USB).

The above examples are to be understood as illustrative. Further examples are envisaged. It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

## Claims

1. A computer-implemented method for identifying a machine learning pipeline to process a subject dataset using a knowledge base storing, for a plurality of different datasets, at least one performance metric for each of one or more different machine learning pipelines, the method comprising:
identifying datasets in the knowledge base that are similar to the subject dataset;
selecting candidate machine learning pipelines in dependence upon the performance metrics for the machine learning pipelines stored in the knowledge base in association with the identified datasets; and
testing the candidate machine learning pipelines to determine performance metrics for each candidate machine learning pipeline,
wherein the testing of the candidate machine learning pipelines is executed in dependence on available computing resources and an available time budget.

2. The computer-implemented method of claim 1, wherein the machine learning pipelines can utilize a distributed machine learning algorithm and/or a centralized machine learning algorithm, and
wherein the available computing resources comprise a plurality of processing nodes.

3. The computer-implemented method of claim 1 or claim 2, wherein selecting the candidate machine learning pipelines comprises:
calculating a similarity score for each of the identified similar data sets;
identifying the machine learning pipelines having the best performance metrics for the similar data sets;
calculating a ranking score for each of the identified machine learning pipelines based on the similarity score of the associated similar dataset and the at least one performance metric for that machine learning pipeline; and
selecting the candidate machine learning pipelines in accordance with the calculated ranking scores.

4. The computer-implemented method of claim 3, wherein calculating the ranking score for one of the identified machine learning pipelines comprises performing a weighted summation of the similarity score for the associated similar dataset and the at least one performance metric.

5. The computer-implemented method of any preceding claim, wherein the knowledge base stores a tunability score in association with a dataset and a machine learning pipeline, wherein the tunability score is indicative of the variability of a performance of that machine learning pipeline when processing that dataset with a configuration of associated hyperparameters, and
wherein the testing of the candidate machine learning pipelines comprises scheduling access by the candidate machine learning pipelines to the computing resources in dependence on the tunability score for each candidate machine learning pipeline.

6. The computer-implemented method of claim 5, wherein the scheduling of access by each of the candidate machine learning pipelines to the computing resources further depends on an iteration time cost for each candidate machine learning pipeline, the iteration time cost indicative of the time required to test a configuration of the associated candidate machine learning pipeline.

7. The computer-implemented method of claim 6, wherein the iteration time cost for a candidate machine learning algorithm depends on the required sample size, the available computing resources and whether the components of the candidate machine learning pipeline can be executed in parallel.

8. The computer-implemented method of claim 6 or 7, wherein the scheduling of access by each of the candidate machine learning pipelines to the computing resources further depends on the at least one performance metric for each candidate machine learning platform.

9. The computer-implemented method of claim 8, wherein the scheduling of access by each of the candidate machine learning pipelines to the computing resources comprises calculating a weighted sum of the tunability score, the iteration time cost and the at least one performance metric for each candidate machine learning algorithm, and scheduling access in accordance with the calculated weighted sums.

10. The computer-implemented method of any preceding claim, further comprising a preliminary step of receiving an input identifying a performance metric to be optimized, wherein the testing of the candidate machine learning pipelines comprises optimizing the input performance metric for each candidate machine learning pipeline in dependence on the available computing resources and the available time budget.

11. The computer-implemented method of claim 10, further comprising ranking the candidate machine learning pipelines in accordance with the input performance metric.

12. The computer-implemented method of any preceding claim, further comprising outputting one or more recommended machine learning pipelines based on the testing.

13. The computer-implemented method of any preceding claim, further comprising, following testing of the candidate machine learning pipelines, storing data indicative of the subject dataset in association with the performance metrics for the candidate machine learning pipelines determined in the testing.

14. A system comprising at least one processor and memory storing instructions which, when implemented by the at least one processor, execute a method as claimed in any preceding claims.

15. A computer-program product storing instructions which, when implemented by at least one processor, execute a method as claimed in any of claims 1 to 13.
